# EUROPEAN PATENT SPECIFICATION

(11) **EP 3 385 867 B1**
(45) Date of publication and mention of the grant of the patent: **20.11.2019**
(21) Application number: 18165366.8
(22) Date of filing: 03.04.2018
(51) Int. Cl.: G06F 16/22, G06F 16/23

(54) **MANAGEMENT OF UNIQUE IDENTIFIERS IN A DATABASE**
VERWALTUNG VON EINDEUTIGEN IDENTIFIKATOREN EIN EINER DATENBANK
GESTION D'IDENTIFIANTS UNIQUES DANS UNE BASE DE DONNEES

(30) Priority: 05.04.2017 FR 1752977; 05.04.2017 US 201715479880
(43) Date of publication of application: 10.10.2018
(73) Proprietor: Amadeus S.A.S., 06410 Biot (FR)
(72) Inventor: Venezia, Alessandro, 06600 Antibes (FR); Devedeux, Thibault, 06600 Antibes (FR); Burdese, Samuel, 06110 Le Cannet (FR); Saraulli, Stefano, 06600 Antibes (FR)
(74) Representative: August Debouzy

(56) References cited:
- US-A1- 2010 138 442
- US-A1- 2015 347 589
- YUAN SHI ET AL: "Object Identifier Reuse Mechanism for TOTEM", DATA ENGINEERING WORKSHOPS, 2006. PROCEEDINGS. 22ND INTERNATIONAL CONF ERENCE ON ATLANTA, GA, USA 03-07 APRIL 2006, PISCATAWAY, NJ, USA,IEEE, 3 April 2006 (2006-04-03), pages x127-x127, XP010912022, DOI: 10.1109/ICDEW.2006.101 ISBN: 978-0-7695-2571-6

## Description

### FIELD OF THE INVENTION

The present invention relates to management of databases accessible on a large scale by a large number of clients with a high rate of updates.

More specifically, the present invention relates to the assignment of identifiers to objects stored in the database, the identifier associated with a given object being, at any given time, unique in the database.

### BACKGROUND OF THE INVENTION

In large-scale information systems, objects stored in a database are usually assigned an identifier consisting, for example, in an alphanumeric string of characters.

The identifier may be used as means for identifying a given object with a data structure of limited size. By processing the identifier instead of the object itself, resources of the overall systems are optimized. Yuan Shi et al. disclose, in "object identifier reuse mechanism for Totem" (22nd conference on data Engineering Workshops 2006) a system to reuse object identifier in order to save resources.

Objects processed and stored in databases may not be static in essence. Objects may be created, deleted and modified at various rates. Therefore, the identifiers may also be created, deleted and modified correspondingly.

However, for databases processing a large amount of data accessed by a large number of clients, creating, deleting, modifying and also assigning identifiers may become a task that impacts the overall performance of the system. One example of a performance parameter that can be impacted is the response time. Other examples are the memory needed for storing the identifiers and their association with the corresponding objects and the communication bandwidth for updating the identifiers and their correspondences.

In some applications, each object is assigned a unique identifier that represents the object in a unique fashion throughout the system.

A field in which the use of unique identifiers in a database is important is the management of travel reservations.

Travel companies such as airline companies and hotel companies for example use very sophisticated databases and reservation software for handling reservations by customers.

A travel reservation involves a large number of participants: commercial agents, transportation companies, customs and other administrative bodies, etc. These participants are also usually distributed over large geographical regions.

Therefore, a common database and communication architecture must be used to endure a proper management of the large amount of information that the travel specifications of each reservation by each customer represent.

The common database is thus accessed by a large number of client devices (at the travel companies) simultaneously, and from a large number of locations.

TPF (acronym for "Transaction Processing Facility") is an example of a real-time operating system developed by IBM™ for processing data transactions involved in travel reservation systems. Other systems exist, as would be understood by the person skilled in the art.

In order to share information concerning a given reservation, the travel industry has developed common descriptors and data structures to be used in the data transaction-processing systems.

Historically, the airline industry defined the PNR (acronym for "Passenger Name Record") which is a record in a database that contains information (including reservation information) concerning a traveller or a group of travellers travelling together. The purpose of the PNR was to make it possible for airline companies to exchange reservation information in case the travel involved several airlines for several destinations. IATA (acronym for "International Air Transportation Association"), the trade association regrouping the airline companies throughout the world, is the body that defines the standard for the PNR (content, format, etc.).

Although PNRs had initially been defined for the airline industry, they are also used for hotel reservation, car rental, train bookings, etc.

In order to facilitate access to the PNRs, unique identifiers are associated with the PNRs. The unique identifiers are usually called "record locators" but other denominations exist.

The record locators are typically defined as an alphanumeric string of characters, for example 6 characters (numbers and letters). The use of an alphanumeric string is the current standard in the industry.

The management of record locators must meet a large number of technical constraints. The following are exemplary constraints:
- A high throughput, for example, more than 50 identifier requests per second,
- A low response delay, for example at least 90% of the identifier requests to be processed in less than a millisecond,
- Being reliably uniquely associated with an active PNR at a given time and avoiding failure due to identification conflicts,
- Being reusable once a previous use of the identifier is exhausted,
- Guaranteeing the avoidance of "lost" identifiers, for example identifiers assigned to an inactive PNR without possibility to recover the identifier (e.g. for reuse),
- Simplicity of operation, avoidance of manual interventions,
- Respect of the communication constraints of the architecture of the system (messaging constraints and the like),
- Being interoperable between transaction data processing systems (TPF developed by IBM™ and other systems),
- Respect standardization constraints.

To cope with such constraints, there is a need for an evolution from centralized mainframes to distributed systems wherein independent and redundant servers (called "backends") can simultaneously and independently perform allocations of record locators for newly created reservation records.

In some centralized mainframes, the record locators not only serve as identifiers for the PNRs but they also serve as a low-level address in the database. In order to generate the record locators, the centralized systems implement algorithms that can convert an address in the database into a record locator compliant with the standard.

Such generation method for unique identifiers is not convenient for distributed architectures. The address-based generation cannot be implemented in each backend without an increase of the complexity of the system while keeping the constraints on the identifiers met (short size with a restricted number of characters, high performance, compatibility, etc.).

Thus, there is a need for improvements of unique identifier generation for database systems.

The present invention lies within this context.

### SUMMARY OF THE INVENTION

According to a **first aspect of the invention,** there is provided a system for associating identifiers with objects represented in the system, wherein, at a given time, a given object represented in a database of the system is associated with a unique identifier,
the system comprising :
- a database, said database comprising:
   ∘ a memory unit configured to store said objects and their respective associations with said identifiers,
   ∘ an index unit configured to store an availability status of the identifiers of the system, and
   ∘ a control pointer unit configured to store pointers to data in the index unit;
- at least one identifier management unit configured to access said database; and
- at least one update unit configured to update the availability status of the identifiers of the system,
wherein :
- said identifiers belong to a finite set of identifiers organized, within said index unit, according to identifier pages,
   ∘ each page being represented by a bitmap
   ∘ wherein each bit of the bitmap corresponds to a respective identifier value, and
   ∘ each bit value corresponds to the availability of the corresponding identifier,
- said pointers to data in the index comprise at least
   ∘ a first pointer to a last page loaded by an identifier management unit of the system, and
   ∘ a second pointer to a last page updated by an update unit of the system, and
wherein :
- said at least one identifier management unit is further configured to:
   ∘ load a first identifier page, based on said first pointer for allocating an identifier of said identifier page to an object to be stored in the database, based on a bitmap corresponding to said first loaded page, and
- said at least one update unit is further configured to:
   ∘ determine identifiers corresponding to a second identifier page based on said second pointer,
   ∘ access said memory unit to check availability of the determined identifiers, and
   ∘ update a bitmap representing said second loaded page based on availability of said determined identifiers, and
- said database is further configured to:
   ∘ store, in said memory unit, an object and its allocated identifier upon its activation in the system, and
   ∘ delete, from said memory unit, an object and its allocated identifier upon its deactivation in the system.

Embodiments provide a short time response while keeping the complexity of implementation low. Embodiments also provide compatibility with existing databases.

According to embodiments, said at least one identifier management unit is further configured to discard said loaded first identifier page, after a duration not exceeding a maximum page lifetime duration.

According to embodiments, said at least one update unit is further configured to wait for said maximum page lifetime duration before determining an identifier corresponding to said second identifier page.

According to embodiments, at least one of an identifier management unit and an update unit is further configured to check whether said first pointer and said second pointer concurrently point to a same identifier page.

According to embodiments, said identifier pages are ordered in a cyclic fashion.

According to embodiments, before allocating an identifier to an object to be stored in the database, the pointers are checked to verify that the second pointer is not pointing to the identifier page next to the one to which points the first pointer.

For example, the pointers are checked each time a page is loaded.

According to embodiments, before updating a bitmap of an identifier page, the pointers are checked to verify that the first pointer is not pointing to the identifier page next to the one to which points the second pointer.

According to a **second aspect of the invention** there is provided a method for associating identifiers with objects represented in a system, wherein, at a given time, a given object represented in a database of the system is associated with a unique identifier,
the system comprising :
- a database, said database comprising:
   ∘ a memory unit configured to store said objects and their respective associations with said identifiers,
   ∘ an index unit configured to store an availability status of the identifiers of the system, and
   ∘ a control pointer unit configured to store pointers to data in the index unit
- at least one identifier management unit configured to access said database, and
- at least one update unit configured to update the availability status of the identifiers in the system,
wherein :
- said identifiers belong to a finite set of identifiers organized, within said index unit (102), according to identifier pages,
   ∘ each page being represented by a bitmap
   ∘ wherein each bit of the bitmap corresponds to a respective identifier value, and
   ∘ each bit value corresponds to the availability of the corresponding identifier,
- said pointers to data in the index comprise at least
   ∘ a first pointer to a last page loaded by an identifier management unit of the system, and
   ∘ a second pointer to a last page updated by an update unit of the system,
the method comprising the following steps, performed by said at least one identifier management unit:
- loading a first identifier page based on said first pointer,
- allocating an identifier of said identifier page to an object to be stored in the database based on a bitmap corresponding to said first loaded page, the method comprising the following steps, performed by said at least one update unit:
- determining identifiers corresponding to a second identifier page based on said second pointer,
- accessing said memory unit to check availability of the determined identifiers,
- updating a bitmap representing said second loaded page based on availability of said determined identifiers, and
   the method comprising the following steps, performed by said database:
   ∘ storing, in said memory unit, an object and its allocated identifier upon its activation in the system, and
   ∘ deleting, from said memory unit, an object and its allocated identifier upon its deactivation in the system.

According to embodiments, said at least one identifier management unit further discards said loaded first identifier page, after a duration not exceeding a maximum page lifetime duration.

According to embodiments, said at least one update unit further waits for said maximum page lifetime duration before determining identifier corresponding to said second identifier page.

According to embodiments, at least one of an identifier management unit and an update unit further checks whether said first pointer and said second pointer concurrently point to a same identifier page.

According to embodiments, said identifier pages are ordered in a cyclic fashion.

According to embodiments, before allocating an identifier to an object to be stored in the database, the pointers are checked to verify that the second pointer is not pointing to the identifier page next to the one to which points the first pointer.

According to embodiments, before updating a bitmap of an identifier page, the pointers are checked to verify that the first pointer is not pointing to the identifier page next to the one to which points the second pointer.

According to a **third aspect of the invention** there is provided computer program product comprising instructions for implementing a method according to the second aspect of the invention when the program is loaded and executed by a programmable apparatus.

There is also provided a non-transitory information storage means readable by a computer or a microprocessor storing instructions of a computer program, for implementing a method according to the second aspect of the invention, when the program is loaded and executed by the computer or microprocessor.

The objects according to the second and third aspects of the invention provide at least the same advantages as those provided by the system according to the first aspect.

### BRIEF DESCRIPTION OF THE DRAWINGS

Features and advantages of the invention will become apparent from the following description of non-limiting exemplary embodiments, with reference to the appended drawings, in which:
- **Figure 1** illustrates a general context of implementation of embodiments;
- **Figures 2A** and **2B** illustrate Record locators according to embodiments;
- **Figure 3** schematically illustrates a table representing PNRs according to embodiments;
- **Figure 4** schematically illustrates an index table according to embodiments;
- **Figures 5A-5B** schematically illustrate a table stored in the Control pointer unit according to embodiments;
- **Figure 6** is a dataflow illustrating steps of for allocating a record locator to a client device according to embodiments;
- **Figure 7** is a dataflow illustrating steps for updating the database system according to embodiments; and
- **Figure 8** schematically illustrates a device according to embodiments.

### DETAILED DESCRIPTION OF THE INVENTION

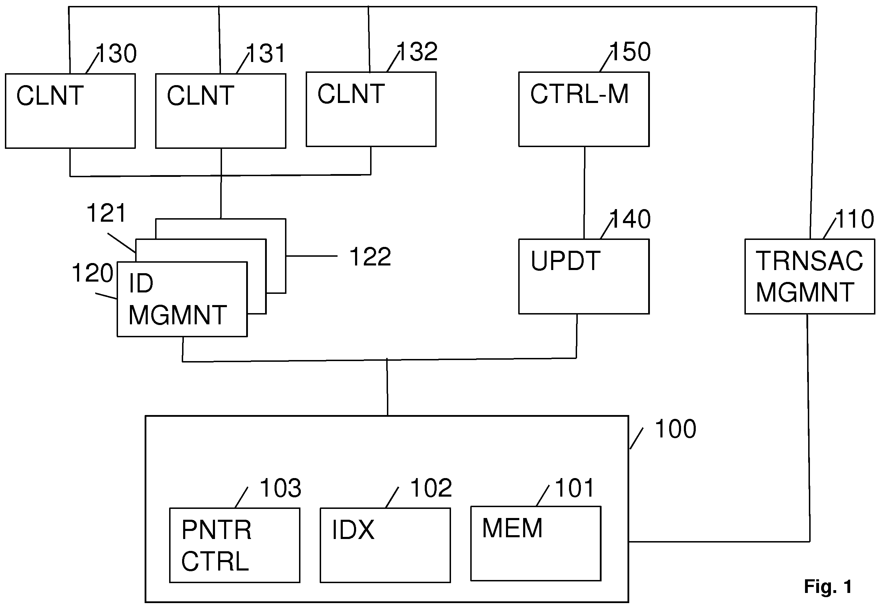

**Figure 1** illustrates a general context of implementation of embodiments.

A database system **100** is provided for storing objects that can be placed and retrieved by a plurality of external devices. The database system may be implemented as a relational database or an object-relational database management system (ORDBMS). For example, the ORDBMS may be a system as marketed by Oracle Corporation™.

For example, the database system **100** may store PNRs created by travel agencies computer implemented management systems.

The database comprises a memory unit **101** for storing the objects (such as the PNRs) and their association with a unique identifier. The unique identifier may be a record locator for example.

According to embodiments, memory unit **101** stores only objects that are active in the overall system. In the case of a PNR, memory unit **101** will only have in memory PNRs that are active. Therefore, as soon as a PNR is no longer needed (for example the travel it represented is terminated), it is removed from memory unit **101.** The object may be erased or deactivated according to any other mechanism. Such mechanism may be performed by an external PNR removal unit (not represented). Actions by the PNR removal unit may be triggered by control unit **150** described hereinafter.

The fact that memory unit **101** comprises only active objects makes it possible to determine, from the association between an object and its unique identifier, whether a unique identifier is available or not for assignment to another object. In other words, since memory unit **101** comprises only active objects, it may be inferred that as soon as a unique identifier is associated with an object in memory unit **101**, it is not available for another object.

The database system **100** further comprises an index unit **102.** Index unit **102** comprises a summary of the availability status of all unique identifiers in the system. Each unique identifier of the system is marked as available or not available in index unit **102.**

The database system **100** further comprises a control pointer unit **103.** Control pointer unit **103** comprises pointers to data in the index unit **102.**

The database system **100** further is connected through a communication network (not represented) to several devices that can read and/or write data in and/or from the database system. The communication network is an Internet Protocol based network for example.

Transaction management unit **110** is a processing unit connected to the database system **100** in charge of updating it as regards the objects stored therein. Upon request of a client device, it creates the object to be stored in the memory unit **101,** based on information provided by the client device (including the unique identifier to be associated with it). Transaction management unit **110** also transmits the objects created to the management database system for storage into memory unit **101.** Transaction management unit **110** may also be involved in the deletion and/or modification of objects in the memory unit **101** of database system **100.**

The unique identifiers are provided to the client devices though one or more identifier management units **120**, **121**, **122** connected to the database system **100.** Identifier management units are independent units **120, 121, 122** ("backends") that can independently have access to the database system 100 to read data. Identifier management units **120, 121, 122** ("backends") can also be independently accessed by one or more client devices **130, 131, 132** in order to obtain unique identifiers.

Synchronization of the use of the unique identifiers is performed through an update unit **140** connected to the database system **100.** According to a general goal of the overall system, at a given time, one unique identifier should not be assigned to more than one active object. In case an identifier is associated with two or more active objects, an error occurred in the system. According to embodiments, an identifier may be present in the system without being associated with an object (like a reservation): for example, in a case in which it is intentionally filtered out (e.g. the identifier represents a bad word or the active object is not officially yet in the system).

In an exemplary embodiment, update unit **140** refreshes the availability status of the unique identifiers in a batch mode. Update of the unique identifier availability status may be managed by a control unit **150** connected to the update unit **140.** Control unit **150** may be implemented using Control-M™ workload automation software by BMC software™.

In the above-described general context of implementation of embodiments, the client devices **130, 131, 132** are connected to the identifier management units **120, 121, 122** to obtain unique identifiers to be associated with objects to be stored in the database system. The client devices **130, 131, 132** are also connected to the transaction management unit **110** for the creation of said objects based on information provided by the client devices and for the storage of the objects in the database system **100** in association with the unique identifiers.

In what follows, the example of a travel management system will be described. The invention is however not limited to this type of applications. Embodiments have other types of applications, in systems wherein objects are to be associated with unique identifiers and wherein the number of available unique identifiers is limited.

In what follows, the unique identifiers may be referred to as "record locators", "recloc" or "rloc". The objects may be referred to as "PNRs". The database system may be referred to as the acronym "RDBMS".

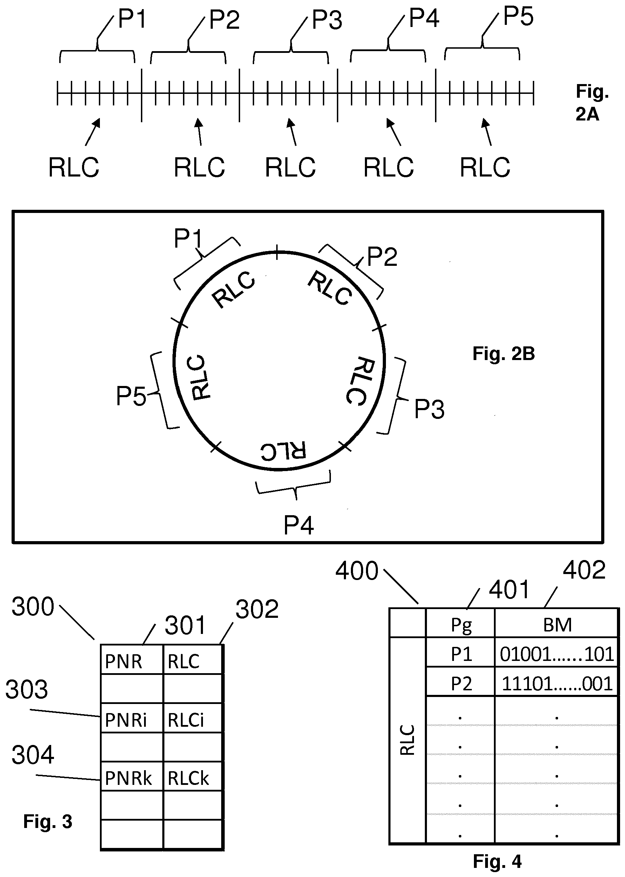

Record locators according to embodiments are described with reference to **Figures 2A** and **2B****.**

Record locators are represented by a finite number of integer numbers "RLC". For example, they are expressed in base 34 left-padded to fit 6 characters. Therefore: 0₁₀ = 222 222₃₄, 1₁₀ = 222 223₃₄... up to ZZZ ZZZ₃4.

The finite set of record locators is logically divided into pages **P1**, ..., **P5.** Each page may comprise a same number of record locators. They may also comprise different numbers of record locators. For example, each page comprises 16000 record locators. The pages may be sequentially numbered. Also, for example, the pages may be adjacent, that is to say, one page comprises successive record locators. Alternatively, the pages may comprise non-adjacent record locators.

In the database system, some operations may process entire pages. Other operations, outside the database system, may process single record locators.

Each record locator may be associated with a value that represents its availability in the system. For example a bit status having a value "1" when the record locator is available and "0" when it is not available.

In **Figure 2A**, the record locators are represented on a finite segment, for example from 222 222 to ZZZ ZZZ.

However, according to embodiments, the record locators are represented as cyclic values like in **Figure 2B****.** The record locators are of limited number and there is a "rollover": when "going past" the biggest number, the count restarts from the first number. In other words, the resource locators satisfy the following relation ZZZ ZZZ + 222 223 = 222 222. The record locator next to the last one is the first one.

Therefore, the record locators are limited in number, ordered in a cyclic fashion and classified according to pages. They also have a usage characterization for indicating whether they are available or not.

**Figure 3** schematically illustrates the table representing the PNRs in memory unit **101.**

The table **300** has a first column **301** storing the PNRs. For example, only the PNRs active in the system are stored in the table. Alternatively, a data structure may be used to differentiate between active and non-active PNRs.

A second column **302** stores the record locators. Since the table contains only active PNRs, the record locators in the table are therefore in use and not available. In case the table differentiates between active and non-active PNRs, the differentiation also applies to the record locators.

Therefore, in each line **303**, **304** of the table, a PNR is uniquely associated with a unique record locator.

**Figure 4** schematically illustrates the index table **400** representing the summary (stored in unit **102**) of the availability status of the record locators in the memory unit **101.**

The record locators are represented according to a circular buffer.

Column **401** comprises the pages ("Pg") of record locators. Column **402** comprises a bitmap ("BM") associated with the corresponding page in column **401** representing the availability status of each record locator in the page.

Value "1" represents a record locator which is available. Value "0" represents a record locators which is in use and not available. Stated otherwise, a record locator that is present in the memory unit **101** as associated with an active PNR is represented by a value "0" in the bitmap corresponding to the page to which it belongs. In case the record locator is absent from the memory unit **101**, it is represented by "1".

In each bitmap of column **401**, a record locator has the position it has in the page to which it belongs. Stated otherwise, the first bit of the bitmap corresponds to the lowest record locator in the page, the last corresponds to the highest record locator in the page.

According to embodiments, for a given page represented in the index table **400**, all the record locators are used.

This means that all the bits of the bitmaps are meaningful. Nevertheless, during the allocation process, the identifier management units **120**, **121**, **122** can skip some of the bits if the corresponding record locators are contained in a table of the memory unit **101** (or any similar storage system). Thus, the table may contain record locators that the system must not generate for technical and/or functional reasons.

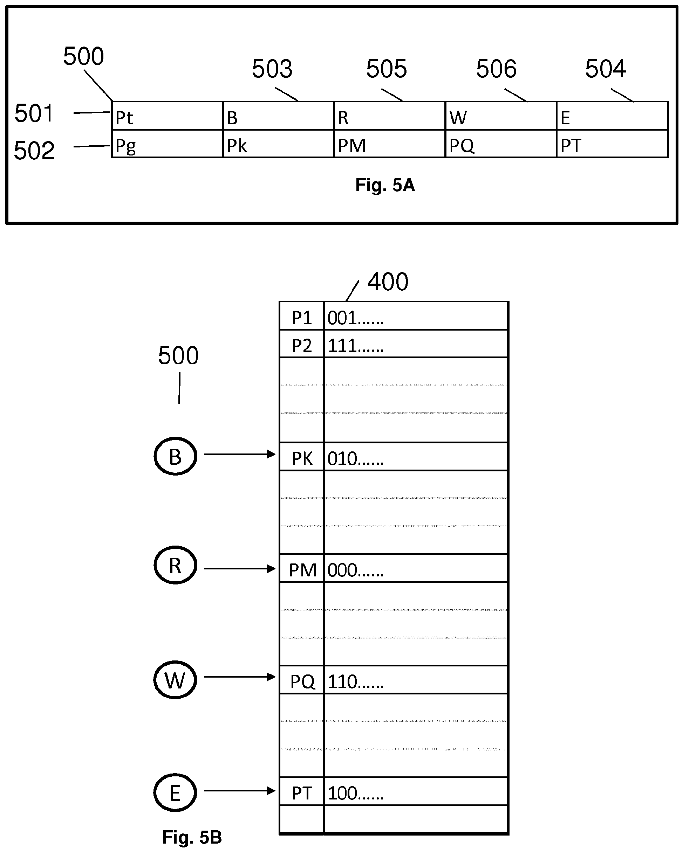

**Figures 5A-5B** schematically illustrate the table **500** stored in the Control pointer unit **103.**

Table **500** stores pointers to pages in the index table **400.** Row **501** represents the pointers to specific pages stored in the index table **400.** Row **502** represent these specific pages.

In some implementations, table **500** may have different row for different record locator ranges. The organization of table **500** with rows and columns as represented in **Figure 5A** allows for such addition of row and such implementations.

Pointers **503** ("B" for "Begin") points to the first page comprising authorized record locators in the system. This means that record locators belonging to a page ranked between the page with the lowest number and the page to which points pointer B cannot be used. In case the pages comprise successive values, this means that record locators having a value inferior to the value of the first record locator in the page to which points pointer B cannot be used.

Pointer **504** ("E" for "End") points to the page after the last page comprising authorized record locators in the system. This means that record locators belonging to a page ranked between the page to which points pointer E and the page with the highest number or belonging to the page to which points pointer E cannot be used. In case the pages comprise successive values, this means that record locators having a value superior or equal to the value of the first record locator in the page to which points pointer E cannot be used.

Pointer **505** ("R" for "Read") points to the last page loaded by an identifier management unit **120, 121, 122.**

Pointer **506** ("W" for "Write") points to the page just after the last page updated by update unit **140.**

As described in what follows, the identifier management units read the record locators on a page per page basis. The unique identifier management units load an entire page for one or more given client devices which will be allowed to use available record locators of the loaded page.

Control rules are implemented that provide that pointers R and W never point to the same page at the same time. For example, these control rules may be implemented by the identifier management units **120, 121, 122.** They may also be implemented by the update unit **140.**

Also, the rules provide that the page to which pointer R points is in use (or loaded) by a unique identifier management unit.

The pointers are checked to determine whether the following relation is true: R+1 = W. This may be checked regularly. This may also be checked each time a page is loaded. In case the page to which points pointer R is the page immediately before the one to which points pointer W, this means that there is no page with record locators available. PNRs cannot be created (or used) until PNRs are deactivated and the update management unit updates the pages with the corresponding record locators.

The pointers are also checked to determine whether the following relation is true: W+1 = R. In case the page to which points pointer W is the page immediately before the one to which points pointer R, this means that all pages are up to date. It can therefore be determined that there is no need for an update by update unit **140.**

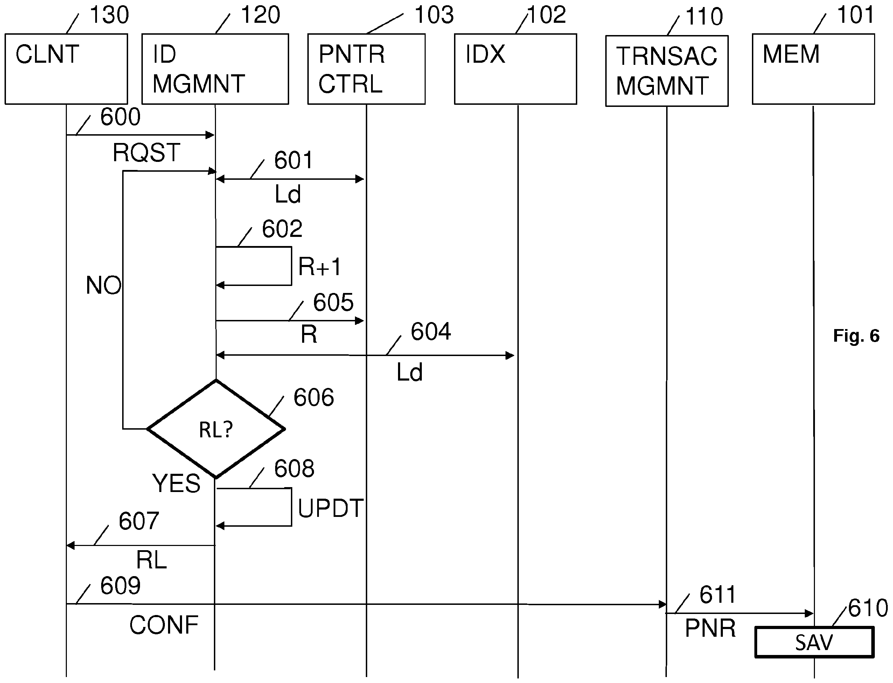

**Figure 6** is a dataflow illustrating the steps for allocating a record locator to a client device.

In a first step **600**, a client device **130** requests a record locator to a unique identifier management unit **120.**

Next, in step **601**, the unique identifier management unit **120** loads the pointer value of pointer **505** ("R") from Control pointer unit **103.** The unique identifier management unit **120** then increments the pointer value in step **602.**

The pointer value is not actually directly loaded from the Control pointer unit. A "read" request is addressed to the database system which performs the processing needed to read the values from the Control pointer unit and to send them back to the unique identifier management unit. The dataflow is simplified for the sake of clarity and conciseness.

The unique identifier management unit **120** stores the incremented value in the Control pointer unit **103** in step **605.**

In step **604**, the unique identifier management unit **120** loads the page in index unit **102** corresponding to pointer **505** (after increment).

The database systems implements concurrency control rules that make it possible to guarantee that the load, increment and store of the value of pointer R are atomic, i.e. the same page cannot be read by two different unique identifier management units. As an example, these control rules are guaranteed by the "ACID" (acronym for "Atomicity, Consistency, Isolation, Durability") properties of relational database transactions.

In case there is no page available, the system returns an error (not represented).

The first page may be loaded by the unique identifier management unit **120** at startup. Alternatively, the first load of a page may be carried out upon the first request received. The identifier management unit will keep the loaded page in memory during a given period of time or until the page has no more record locators available in it.

For example, in a travel management system, the lifetime of a loaded page may be 12 minutes.

The unique identifier management unit **120** checks whether it can keep a loaded page in memory each time it accesses the page itself (for finding an available record locator for the client device).

When a duration called "page lifetime" corresponding to a page consultation period elapses or when it does not have any more record locators available (step **606**, NO), the unique identifier management unit **120** immediately reloads another page (steps **601** to **605**).

The unique identifier management unit **120** may also reload a page (after checking the above conditions) after having allocated a record locator to a client device.

Loading a whole page, rather than a single record locator, makes it possible to guarantee that most of the requests can be satisfied without accessing the database.

Testing the page status after replying to the last client device, but before accepting the next request by a client device, keeps the response time short (page loading takes place "in between" rather than "during" the processing of requests).

Once the unique identifier management unit **120** has a valid page in memory, it looks for an available record locator in it during step **606** and returns it (YES) to the client device **130** during step **607.**

The unique identifier management unit **120** updates the availability status of the record locator in the page it has loaded during step **608.** The unique identifier management unit **120** does not directly update index unit **102** (to avoid database accesses and thereby increasing performance).

The system makes it possible to guarantee that no other unique identifier management unit can read the (now out-of-date) page in the database before the update unit **140** has refreshed the information in it.

The process does not end, unless the unique identifier management units are switched off by an operator. They keep answering queries by client devices.

If the PNR creation completes, its data is stored in memory unit **101** during step **610.**

The client device **130** confirms the creation of the PNR with the associated record locator it retrieved from the unique identifier management unique and sends the corresponding data to the Transaction management unit **110** (step **609**). Then, the Transaction management unit sends the data to the database during step **611** and the storage is performed during step 610

In the above process, the pages pointed to by pointers R and W are certainly different, therefore the database write cannot happen on a record locator being currently read by the update unit **140.** This guarantees the correctness of the access to the database by the update unit **140**, even if it does not lock the PNRs.

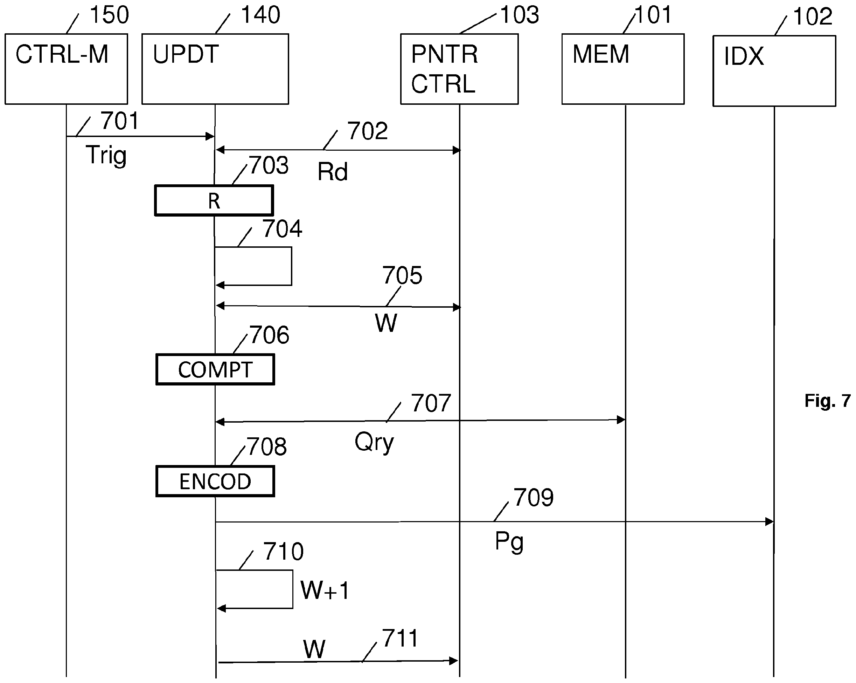

**Figure 7** is a dataflow illustrating the steps for updating the database system according to the allocation of record locators to PNRs.

The update is performed by the update unit **140** independently from the operations of the unique identifier management units **120, 121, 122.**

The update is triggered by control unit **150** during a step **701.**

The update unit **140** then reads, during step **702**, the values of pointers **503** to **506** (B, R, W, E) from Control pointer unit **103.**

The read request is not actually directly addressed to the Control pointer unit. The read request goes to the database system which performs the processing needed to read the values from the Control pointer unit and to send them back to the update unit. The dataflow is simplified for the sake of clarity and conciseness.

After startup, the update unit stores the initial value of pointer R during step **703.** Then, it waits a duration called "page lifetime" (corresponding to a page consultation period) during step **704.** The page duration time is the same as the duration for the unique identifier management unit to keep the pages.

Step **704** makes it possible to guarantee that any page loaded in memory by a unique identifier management unit has certainly been used or discarded at the end of the step.

Then, the update unit loads the value of pointer W from the Control pointer unit during step **705** and computes the block of record locators contained in the corresponding page in step **706.**

The update unit then queries the database system about the availability status of these record locators during step **707.** The update unit checks whether the record locators are stored in memory unit **101** comprising the active PNRs.

By using one query per page, the update unit loads information for a large number of record locators at a time, thereby reducing the database traffic and the impact of network latency.

Once the data is returned by the database system, the update unit encodes it in the page (step **708**) and stores it in the index unit **102** of the database (step **709**). Finally the update unit increments the value of pointer W in step **710.** The incremented value of pointer W is then stored in the Control pointer unit **103** in step **711.** The above process then loops to process another page.

The update unit regularly checks, at each implementation of the process of Figure 7, whether the value W reaches the value of pointer R as stored (in step **703**) before the waiting step **704** because pages after this point may still be in use by online nodes.

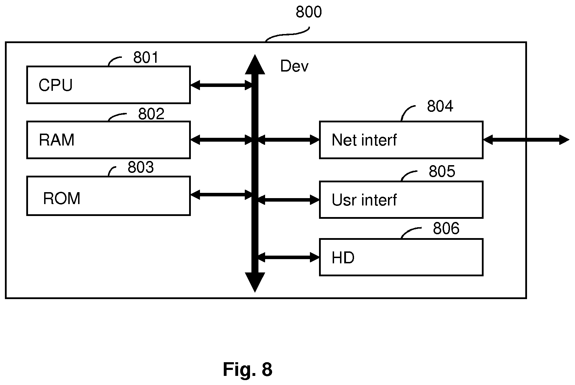

**Figure 8** is a schematic block diagram of a device **800** for implementing of one or more embodiments of the invention. The various parts of the system described above may have a same structure as device **800.**

The device **800** comprises a communication bus connected to:
- a central processing unit **801**, such as a microprocessor, denoted CPU;
- a random access memory **802**, denoted RAM, for storing the executable code of the method of embodiments of the invention as well as the registers adapted to record variables and parameters necessary for implementing a method according to embodiments, the memory capacity thereof can be expanded by an optional RAM connected to an expansion port for example;
- a read only memory **803**, denoted ROM, for storing computer programs for implementing embodiments of the invention;
- a network interface **804**, which is typically connected to a communication network over which digital data to be processed are transmitted or received. The network interface **804** can be a single network interface, or composed of a set of different network interfaces (for instance wired and wireless interfaces, or different kinds of wired or wireless interfaces). Data are written to the network interface for transmission or are read from the network interface for reception under the control of the software application running in the CPU **801;**
- a user interface **805** for receiving inputs from a user or to display information to a user;
- a hard disk **806** denoted HD
- an I/O module **807** for receiving/sending data from/to external devices such as a video source or display

The executable code may be stored either in read only memory **803**, on the hard disk **806** or on a removable digital medium such as for example a disk. According to a variant, the executable code of the programs can be received by means of a communication network, via the network interface **804**, in order to be stored in one of the storage means of the communication device **800**, such as the hard disk **806**, before being executed.

The central processing unit **801** is adapted to control and direct the execution of the instructions or portions of software code of the program or programs according to embodiments of the invention, which instructions are stored in one of the aforementioned storage means. After powering on, the CPU **801** is capable of executing instructions from main RAM memory **802** relating to a software application after those instructions have been loaded from the program ROM **803** or the hard-disk (HD) **806** for example. Such a software application, when executed by the CPU **801**, causes the steps of a method according to embodiments to be performed.

While the invention has been illustrated and described in detail in the drawings and foregoing description, such illustration and description are to be considered illustrative or exemplary and not restrictive, the invention being not restricted to the disclosed embodiment. Other variations to the disclosed embodiment can be understood and effected by those skilled in the art in practicing the claimed invention, from a study of the drawings, the disclosure and the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A system for associating identifiers with objects represented in the system, wherein, at a given time, a given object represented in a database of the system is associated with a unique identifier,
the system comprising :
- a database (100), said database comprising:
∘ a memory unit (101) configured to store said objects and their respective associations with said identifiers,
∘ an index unit (102) configured to store an availability status of the identifiers of the system, and
∘ a control pointer unit (103) configured to store pointers (503, 504, 505, 506) to data in the index unit;
- at least one identifier management unit (120, 121, 122) configured to access said database (100); and
- at least one update unit (140) configured to update the availability status of the identifiers of the system,
wherein :
- said identifiers belong to a finite set of identifiers organized, within said index unit (102), according to identifier pages (P1, P2, P3, P4, P5),
∘ each page being represented by a bitmap
∘ wherein each bit of the bitmap corresponds to a respective identifier value, and
∘ each bit value corresponds to the availability of the corresponding identifier,
- said pointers to data in the index comprise at least
∘ a first pointer (505) to a last page loaded by an identifier management unit (120, 121, 122) of the system, and
∘ a second pointer (506) to a last page updated by an update unit (140) of the system, and
wherein :
- said at least one identifier management unit (120, 121, 122) is further configured to :
∘ load (604) a first identifier page, based on said first pointer (505) for allocating (607) an identifier of said identifier page to an object to be stored (610) in the database, based on a bitmap corresponding to said first loaded page, and
- said at least one update unit (140) is further configured to:
∘ determine (706) identifiers corresponding to a second identifier page based on said second pointer (506),
∘ access (707) said memory unit to check availability of the determined identifiers, and
∘ update (708) a bitmap representing said second loaded page based on availability of said determined identifiers, and
- said database is further configured to:
∘ store (610), in said memory unit (101), an object and its allocated identifier upon its activation in the system, and
∘ delete, from said memory unit (101), an object and its allocated identifier upon its deactivation in the system.

2. A system according to claim 1, wherein said at least one identifier management unit (120, 121, 122) is further configured to discard said loaded first identifier page, after a duration not exceeding a maximum page lifetime duration.

3. A system according to claim 2, wherein said at least one update unit (140) is further configured to wait (704) for said maximum page lifetime duration before determining an identifier corresponding to said second identifier page.

4. A system according to any one of the preceding claims, wherein at least one of an identifier management unit and an update unit is further configured to check whether said first pointer and said second pointer concurrently point to a same identifier page.

5. A system according to any one of the preceding claims, wherein said identifier pages are ordered in a cyclic fashion.

6. A system according to claim 5, wherein, before allocating an identifier to an object to be stored in the database, the pointers are checked to verify that the second pointer is not pointing to the identifier page next to the one to which points the first pointer.

7. A system according to claim 5 or 6, wherein before updating a bitmap of an identifier page, the pointers are checked to verify that the first pointer is not pointing to the identifier page next to the one to which points the second pointer.

8. A method for associating identifiers with objects represented in a system, wherein, at a given time, a given object represented in a database of the system is associated with a unique identifier,
the system comprising :
- a database (100), said database comprising:
∘ a memory unit (101) configured to store said objects and their respective associations with said identifiers,
∘ an index unit (102) configured to store an availability status of the identifiers of the system, and
∘ a control pointer unit (103) configured to store pointers (503, 504, 505, 506) to data in the index unit
- at least one identifier management unit (120, 121, 122) configured to access said database (100), and
- at least one update unit (140) configured to update the availability status of the identifiers in the system,
wherein :
- said identifiers belong to a finite set of identifiers organized, within said index unit (102), according to identifier pages (P1, P2, P3, P4, P5),
∘ each page being represented by a bitmap
∘ wherein each bit of the bitmap corresponds to a respective identifier value, and
∘ each bit value corresponds to the availability of the corresponding identifier, and
- said pointers to data in the index comprise at least
∘ a first pointer (505) to a last page loaded by an identifier management unit (120, 121, 122) of the system, and
∘ a second pointer (506) to a last page updated by an update unit (140) of the system;
the method comprising the following steps, performed by said at least one identifier management unit (120, 121, 122) :
- loading (604), by said at least one identifier management unit (120, 121, 122), a first identifier page, based on said first pointer (505),
- allocating (607) an identifier of said identifier page to an object to be stored (610) in the database, based on a bitmap corresponding to said first loaded page,
the method comprising the following steps, performed by said at least one update unit (140):
- determining (706) identifiers corresponding to a second identifier page based on said second pointer (506),
- accessing (707) said memory unit to check availability of the determined identifiers, and
- updating (708) a bitmap representing said second loaded page based on availability of said determined identifiers, and
the method comprising the following steps, performed by said database:
∘ storing (610), in said memory unit (101), an object and its allocated identifier upon its activation in the system, and
∘ deleting, from said memory unit (101), an object and its allocated identifier upon its deactivation in the system.

9. A method according to claim 8, wherein said at least one identifier management unit (120, 121, 122) further discards said loaded first identifier page, after a duration not exceeding a maximum page lifetime duration.

10. A method according to claim 9, wherein said at least one update unit (140) further waits (704) for said maximum page lifetime duration before determining identifier corresponding to said second identifier page.

11. A method according to any one of claims 8 to 10, wherein at least one of an identifier management unit and an update unit further checks whether said first pointer and said second pointer concurrently point to a same identifier page.

12. A method according to any one of claims 8 to 11, wherein said identifier pages are ordered in a cyclic fashion.

13. A method according to claim 12, wherein, before allocating an identifier to an object to be stored in the database, the pointers are checked to verify that the second pointer is not pointing to the identifier page next to the one to which points the first pointer.

14. A method according to claim 12 or 13, wherein before updating a bitmap of an identifier page, the pointers are checked to verify that the first pointer is not pointing to the identifier page next to the one to which points the second pointer.

15. A computer program product comprising instructions for implementing a method according to any one of claims 8 to 14 when the program is loaded on and executed by a programmable apparatus.

## Patentansprüche

1. System zur Zuordnung von Kennungen zu im System dargestellten Objekten, wobei zu einem bestimmten Zeitpunkt einem bestimmten Objekt, das in einer Datenbank des Systems dargestellt ist,
wobei das System umfasst:
- eine Datenbank (100), wobei die Datenbank umfasst:
∘ eine Speichereinheit (101), die zum Speichern von Objekten und ihren jeweiligen Zuordnungen zu den Kennungen konfiguriert ist,
∘ eine Indexeinheit (102), die zum Speichern eines Verfügbarkeitsstatus der Kennungen des Systems konfiguriert ist, und
∘ eine Steuerungs-Zeigereinheit (103), die zum Speichern von Zeigern (503, 504, 505, 506) auf Daten in der Indexeinheit konfiguriert ist,
- mindestens eine Kennungsverwaltungseinheit (120, 121, 122), die zum Zugreifen auf die Datenbank (100) konfiguriert ist, und
- mindestens eine Aktualisierungseinheit (140), die zum Aktualisieren des Verfügbarkeitsstatus der Kennungen des Systems konfiguriert ist,
wobei:
- die Kennungen zu einer endlichen Menge von Kennungen, die nach Kennungsseiten (P1, P2, P3, P4, P5) innerhalb der Indexeinheit (102) organisiert sind,
∘ jede Seite von einer Bitmap dargestellt ist,
∘ wobei jedes Bit der Bitmap einem jeweiligen Kennungswert entspricht und
∘ jeder Bitwert der Verfügbarkeit der entsprechenden Kennung entspricht,
- die Zeiger auf Daten im Index mindestens umfassen:
∘ einen ersten Zeiger (505) auf eine von einer Kennungsverwaltungseinheit (120, 121, 122) des Systems zuletzt geladenen Seite und
∘ einen zweiten Zeiger (506) auf eine von einer Aktualisierungseinheit (140) des Systems zuletzt aktualisierten Seite und
wobei:
- die mindestens eine Kennungsverwaltungseinheit (120, 121, 122) ferner zur Ausführung folgender Funktionen konfiguriert ist:
∘ Laden (604) einer ersten Kennungsseite aufgrund des ersten Zeigers (505), um einem in der Datenbank zu speichernden Objekt (610) eine Kennung der Kennungsseite zuzuordnen (607), aufgrund einer Bitmap, die der ersten geladenen Seite entspricht, und
- die mindestens eine Aktualisierungseinheit (140) ferner zur Ausführung folgender Funktionen konfiguriert ist:
∘ Bestimmen (706) von Kennungen, die einer zweiten Kennungsseite entsprechen, aufgrund des zweiten Zeigers (506),
∘ Zugreifen (707) auf die Speichereinheit, um die Verfügbarkeit der bestimmten Kennungen zu prüfen, und
∘ Aktualisieren (708) einer Bitmap, die der zweiten geladenen Seite entspricht, aufgrund der Verfügbarkeit der bestimmten Kennungen und
- die Datenbank ferner zur Ausführung folgender Funktionen konfiguriert ist:
∘ Speichern (610) eines Objektes und der diesem zugewiesenen Kennung in der Speichereinheit (101) bei deren Aktivierung im System und
∘ Löschen eines Objektes und der diesem zugewiesenen Kennung in der Speichereinheit (101) bei deren Deaktivierung aus dem System.

2. System nach Anspruch 1, wobei die mindestens eine Kennungsverwaltungseinheit (120, 121, 122) ferner derart konfiguriert ist, dass sie nach einer Dauer, die eine maximale Lebensdauer einer Seite nicht übersteigt, die geladene erste Kennungsseite verwirft.

3. System nach Anspruch 2, wobei die mindestens eine Aktualisierungseinheit (140) ferner derart konfiguriert ist, dass sie die maximale Lebensdauer der Seite abwartet (704), bevor sie eine der zweiten Kennungsseite entsprechende Kennung bestimmt.

4. System nach einem der vorstehenden Ansprüche, wobei mindestens eine einer Kennungsverwaltungseinheit und einer Aktualisierungseinheit ferner derart konfiguriert ist, dass sie prüft, ob der erste Zeiger und der zweite Zeiger gleichtzeitig auf dieselbe Kennungsseite zeigen.

5. System nach einem der vorstehenden Ansprüche, wobei die Kennungsseiten zyklisch geordnet sind.

6. System nach Anspruch 5, wobei die Zeiger vor der Zuweisung einer Kennung zu einem in der Datenbank zu speichernden Objekt geprüft werden, um zu verifizieren, dass der zweite Zeiger nicht auf die Kennungsseite zeigt, die neben der Seite liegt, auf die der erste Zeiger zeigt.

7. System nach Anspruch 5 oder 6, wobei die Zeiger vor der Aktualisierung einer Bitmap einer Kennungsseite geprüft werden, um zu verifizieren, dass der erste Zeiger nicht auf die Kennungsseite zeigt, die neben der Seite liegt, auf die der zweite Zeiger zeigt.

8. Verfahren zur Zuordnung von Kennungen zu im System dargestellten Objekten, wobei zu einem bestimmten Zeitpunkt einem bestimmten Objekt, das in einer Datenbank des Systems dargestellt ist,
wobei das System umfasst:
- eine Datenbank (100), wobei die Datenbank umfasst:
∘ eine Speichereinheit (101), die zum Speichern von Objekten und ihren jeweiligen Zuordnungen zu den Kennungen konfiguriert ist,
∘ eine Indexeinheit (102), die zum Speichern eines Verfügbarkeitsstatus der Kennungen des Systems konfiguriert ist, und
∘ eine Steuerungs-Zeigereinheit (103), die zum Speichern von Zeigern (503.504, 504, 505, 506) auf Daten in der Indexeinheit konfiguriert ist,
- mindestens eine Kennungsverwaltungseinheit (120, 121, 122), die zum Zugreifen auf die Datenbank (100) konfiguriert ist, und
- mindestens eine Aktualisierungseinheit (140), die zum Aktualisieren des Verfügbarkeitsstatus der Kennungen im System konfiguriert ist,
wobei:
- die Kennungen zu einer endlichen Menge von Kennungen, die nach Kennungsseiten (P1, P2, P3, P4, P5) innerhalb der Indexeinheit (102) organisiert sind,
∘ jede Seite von einer Bitmap dargestellt ist,
∘ wobei jedes Bit der Bitmap einem jeweiligen Kennungswert entspricht und
∘ jeder Bitwert der Verfügbarkeit der entsprechenden Kennung entspricht und
- die Zeiger auf Daten im Index mindestens umfassen:
∘ einen ersten Zeiger (505) auf eine von einer Kennungsverwaltungseinheit (120, 121, 122) des Systems zuletzt geladenen Seite und
∘ einen zweiten Zeiger (506) auf eine von einer Aktualisierungseinheit (140) des Systems zuletzt aktualisierten Seite,
wobei das Verfahren folgende Schritte umfasst, die von der mindestens einen Kennungsverwaltungseinheit (120, 121, 122) ausgeführt werden:
- Laden (604) einer ersten Kennungsseite durch die mindestens eine Kennungsverwaltungseinheit (120, 121, 122) aufgrund des ersten Zeigers (505),
- Zuweisen (607) einer Kennung der Kennungsseite zu einem in der Datenbank zu speichernden Objekt (610) aufgrund einer der ersten geladenen Seite entsprechenden Bitmap,
wobei das Verfahren folgende Schritte umfasst, die von der mindestens einen Aktualisierungseinheit (140) ausgeführt werden:
- Bestimmen (706) von Kennungen, die einer zweiten Kennungsseite entsprechen, aufgrund des zweiten Zeigers (506),
- Zugreifen (707) auf die Speichereinheit, um die Verfügbarkeit der bestimmten Kennungen zu prüfen, und
- Aktualisieren (708) einer Bitmap, die der zweiten geladenen Seite entspricht, aufgrund der Verfügbarkeit der bestimmten Kennungen und
wobei das Verfahren folgende Schritte umfasst, die von der Datenbank ausgeführt werden:
∘ Speichern (610) eines Objektes und der diesem zugewiesenen Kennung in der Speichereinheit (101) bei deren Aktivierung im System und
∘ Löschen eines Objektes und der diesem zugewiesenen Kennung in der Speichereinheit (101) bei deren Deaktivierung aus dem System.

9. Verfahren nach Anspruch 8, wobei die mindestens eine Kennungsverwaltungseinheit (120, 121, 122) ferner nach einer Dauer, die eine maximale Lebensdauer einer Seite nicht übersteigt, die geladene erste Kennungsseite verwirft.

10. Verfahren nach Anspruch 9, wobei die mindestens eine Aktualisierungseinheit (140) ferner sie die maximale Lebensdauer der Seite abwartet (704), bevor sie eine der zweiten Kennungsseite entsprechende Kennung bestimmt.

11. Verfahren nach einem der Ansprüche 8 - 10, wobei mindestens eine einer Kennungsverwaltungseinheit und einer Aktualisierungseinheit ferner prüft, ob der erste Zeiger und der zweite Zeiger gleichtzeitig auf dieselbe Kennungsseite zeigen.

12. Verfahren nach einem der Ansprüche 8 - 11, wobei die Kennungsseiten zyklisch geordnet sind.

13. Verfahren nach Anspruch 12, wobei die Zeiger vor der Zuweisung einer Kennung zu einem in der Datenbank zu speichernden Objekt geprüft werden, um zu verifizieren, dass der zweite Zeiger nicht auf die Kennungsseite zeigt, die neben der Seite liegt, auf die der erste Zeiger zeigt.

14. Verfahren nach Anspruch 12 oder 13, wobei die Zeiger vor der Aktualisierung einer Bitmap einer Kennungsseite geprüft werden, um zu verifizieren, dass der erste Zeiger nicht auf die Kennungsseite zeigt, die neben der Seite liegt, auf die der zweite Zeiger zeigt.

15. Computerprogrammprodukt, umfassend Befehle zur Ausführung eines Verfahrens nach einem der Ansprüche 8 - 14, wenn das Programm auf ein programmierbares Gerät geladen und davon ausgeführt wird.

## Revendications

1. Un système permettant d'associer des identifiants à des objets représentés dans le système, dans lequel, à un moment donné, un objet donné représenté dans une base de données du système est associé à un identifiant unique,
le système comprenant :
- une base de données (100), ladite base de données comprenant :
∘ une unité de mémoire (101) configurée pour stocker lesdits objets et leurs associations respectives avec lesdits identifiants,
∘ une unité d'indexation (102) configurée pour stocker un état de disponibilité des identifiants du système, et
∘ une unité de pointeurs de contrôle (103) configurée pour stocker des pointeurs (503, 504, 505, 506) vers des données dans l'unité d'indexation ;
- au moins une unité de gestion d'identifiants (120, 121, 122) configurée pour accéder à ladite base de données (100) ; et
- au moins une unité d'actualisation (140) configurée pour mettre à jour l'état de disponibilité des identifiants du système,
dans lequel,
- lesdits identifiants appartiennent un ensemble fini d'identifiants organisés, à l'intérieur de ladite unité d'indexation (102), selon des pages d'identifiants (P1, P2, P3, P4, P5),
∘ chaque page étant représentée par un bitmap
∘ dans laquelle chaque bit du bitmap correspond à une valeur d'identifiant respective, et
∘ chaque valeur de bit correspond à la disponibilité de l'identifiant correspondant,
- lesdits pointeurs de donnée dans l'index comprennent au moins
∘ un premier pointeur (505) vers une dernière page chargée par unité de gestion d'identifiants (120, 121, 122) du système, et
∘ un deuxième pointeur (506) vers une dernière page actualisée par une unité d'actualisation (140) du système, et
dans lequel
- ladite au moins une unité de gestion d'identifiants (120, 121, 122) est par ailleurs configurée pour :
∘ charger (604) une première page d'identifiants, basée sur ledit pointeur (505) pour attribuer (607) un identifiant de ladite page d'identifiants à un objet devant être stocké (610) dans la base de données, sur la base d'un bitmap correspondant à ladite première page chargée, et
- ladite au moins une unité d'actualisation (140) est par ailleurs configurée pour :
∘ déterminer (706) les identifiants correspondants à une deuxième page d'identifiants sur la base dudit deuxième pointeur (506),
∘ accéder (707) à ladite unité de mémoire pour vérifier la disponibilité des identifiants déterminés, et
∘ actualiser (708) un bitmap représentant ladite deuxième page chargée sur la base de la disponibilité desdits identifiants déterminés, et
- ladite base de données est par ailleurs configurée pour :
∘ stocker (610), dans ladite unité de mémoire (101), un objet et l'identifiant qui lui a été attribué lors de son activation dans le système, et
∘ supprimer, de ladite unité de mémoire (101), un objet et l'identifiant qui lui a été attribué lors de sa désactivation dans le système.

2. Un système selon la revendication 1, dans lequel au moins une unité de gestion d'identifiants (120, 121, 122) est par ailleurs configurée pour rejeter ladite première page d'identifiant chargée, après un délai écoulé ne dépassant pas une durée de vie maximale de page.

3. Un système selon la revendication 2, dans lequel ladite au moins une unité d'actualisation (140), est par ailleurs configurée pour laisser écouler (704) ladite durée de vie maximale de page avant de déterminer un identifiant correspondant à ladite deuxième page d'identifiants.

4. Un système selon l'une quelconque des revendications précédentes, dans lequel au moins une unité d'une unité de gestion d'identifiants et d'une unité d'actualisation est par ailleurs configurée pour vérifier si ledit premier pointeur et ledit deuxième pointeur pointent simultanément vers une même page d'identifiants.

5. Un système selon l'une quelconque des revendications précédentes, dans lequel lesdites pages d'identifiant sont commandées de façon cyclique.

6. Un système selon la revendication 5, dans lequel, avant d'attribuer un identifiant à un objet devant être stocké dans la base de données, les pointeurs sont contrôlés pour vérifier que le deuxième pointeur ne pointe pas vers la page d'identifiants voisine de la page vers laquelle pointe le premier pointeur.

7. Un système selon la revendication 5 ou 6, dans lequel avant d'actualiser un bitmap d'une page d'identifiants, les pointeurs sont contrôlés pour vérifier que le premier pointeur ne pointe pas vers la page d'identifiants voisine de la page vers laquelle pointe le deuxième pointeur.

8. Un procédé pour associer des identifiants à des objets représentés dans un système, dans lequel à un moment donné, un objet donné représenté dans une base de données du système est associé à un identifiant unique,
le système comprenant :
- une base de données (100), ladite base de données comprenant :
∘ une unité de mémoire (101) configurée pour stocker lesdits objets et leurs associations respectives avec lesdits identifiants,
∘ une unité d'indexation (102) configurée pour stocker un état de disponibilité des identifiants du système, et
∘ une unité de pointeurs de contrôle (103) configurée pour stocker des pointeurs (503, 504, 505, 506) vers des données dans l'unité d'indexation
- au moins une unité de gestion d'identifiants (120, 121, 122) configurée pour accéder à ladite base de données (100), et
- au moins une unité d'actualisation (140) configurée pour mettre à jour l'état de disponibilité des identifiants dans le système,
dans lequel,
- lesdits identifiants appartiennent à un ensemble fini d'identifiants organisés, à l'intérieur de ladite unité d'indexation (102), selon des pages d'identifiants (P1, P2, P3, P4, P5),
∘ chaque page étant représentée par un bitmap
∘ dans lequel chaque bit du bitmap correspond à une valeur respective d'identifiant, et
∘ chaque valeur de bit correspond à la disponibilité de l'identifiant correspondant, et
- lesdits pointeurs de données dans l'index comprennent au moins
∘ un premier pointeur (505) vers une dernière page chargée par une unité de gestion d'identifiants (120, 121, 122) du système, et
∘ un deuxième pointeur (506) vers une dernière page actualisée par une unité d'actualisation (140) du système ;
le procédé comprenant les étapes suivantes, mises en œuvre par ladite au moins une unité de gestion d'identifiants (120, 121, 122) :
- le chargement (604), par ladite au moins une unité de gestion d' identifiants (120, 121, 122), d'une première page d'identifiants, sur la base dudit premier pointeur (505),
- l'attribution (607) d'un identifiant de ladite page d'identifiants à un objet devant être stocké (610) dans la base de données, sur la base d'un bitmap correspondant à ladite première page chargée,
le procédé comprenant les étapes suivantes, mise en œuvre par ladite au moins une unité d'actualisation (140) :
- la détermination (706) des identifiants correspondants à une deuxième page d'identifiants sur la base dudit deuxième pointeur (506),
- l'accès (707) à ladite unité de mémoire pour vérifier la disponibilité des identifiants déterminés, et
- l'actualisation (708) d'un bitmap représentant ladite deuxième page chargée sur la base de la disponibilité desdits identifiants déterminés, et
le procédé comprenant les étapes suivantes, mises en œuvre par ladite base de données :
∘ le stockage (610), dans ladite unité de mémoire (101), d'un objet et de l'identifiant qui lui a été attribué lors de son activation dans le système, et
∘ la suppression, de ladite unité de mémoire (101), d'un objet et de l'identifiant qui lui a été attribué lors de sa désactivation dans le système.

9. Un procédé selon la revendication 8, dans lequel au moins une unité de gestion d'identifiants (120, 121, 122) rejette par ailleurs ladite première page d'identifiants chargée, après une durée écoulée ne dépassant pas une durée de vie maximale de page.

10. Un procédé selon la revendication 9, dans lequel ladite au moins une unité d'actualisation (140) attend par ailleurs (704) que le temps de ladite durée de vie maximale de page soit écoulé avant de déterminer un identifiant correspondant à ladite deuxième page d'identifiants.

11. Un procédé selon l'une quelconque des revendications 8 à 10, dans lequel au moins une unité d'une unité de gestion d'identifiants et d'une unité d'actualisation vérifie par ailleurs si ledit premier pointeur et ledit deuxième pointeur pointent simultanément vers une même page d'identifiants.

12. Un procédé selon l'une quelconque des revendications 8 à 11, dans lequel lesdites pages d'identifiants sont commandées de façon cyclique.

13. Un procédé selon la revendication 12, dans lequel avant d'attribuer un identifiant à un objet devant être stocké dans la base de données, les pointeurs sont contrôlés pour vérifier que le deuxième pointeur ne pointe pas vers la page d'identifiants voisine de la page vers laquelle pointe le premier pointeur.

14. Un procédé selon la revendication 12 ou 13, dans lequel avant d'actualiser un bitmap de page d'identifiants, les pointeurs sont contrôlés pour vérifier que le premier pointeur ne pointe pas vers la page d'identifiants voisine de la page vers laquelle pointe le deuxième pointeur.

15. Un produit-programme d'ordinateur comprenant des instructions pour mettre en œuvre un procédé selon l'une quelconque des revendications 8 à 14 lorsque le programme est chargé et exécuté par un appareil programmable.
